(19) Europäisches Patentamt
European Patent Office
Office européen des brevets

(11) EP 3 591 975 A1

(12) EUROPEAN PATENT APPLICATION

(43) Date of publication:
08.01.2020 Bulletin 2020/02

(51) Int Cl.:
H04N 19/597 (2014.01)   H04N 19/88 (2014.01)
H04N 19/70 (2014.01)

(21) Application number: 19184143.6

(22) Date of filing: 03.07.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.07.2018 US 201862693485 P

(71) Applicant: Industrial Technology Research
Institute
31040 Hsinchu (TW)

(72) Inventors:
• TSAI, Yi-Ting
310 Hsinchu County (TW)
• LIN, Chun-Lung
114 Taipei City (TW)
• LIN, Ching-Chieh
300 Hsinchu City (TW)

(74) Representative: Becker Kurig Straus
Patentanwälte
Bavariastrasse 7
80336 München (DE)

(54) **METHOD AND APPARATUS FOR PROCESSING PATCHES OF A POINT CLOUD**

(57) A method and an apparatus for processing patches of a point cloud are provided. The apparatus includes an input/output (I/O) device, a storage device, and a processor. The I/O device is used to receive a bit stream of the point cloud. The storage device is configured to store an index table recording indexes corresponding to a plurality of orientations. The processor is coupled to the I/O device and the storage device and is configured to execute a program to demultiplex the bit stream of the point cloud into a patch image and indexes corresponding to a plurality of patches in the patch image, look up the index table to obtain an orientation of each patch, transform the patch image according to the orientation to recover the plurality of patches of the point cloud, and reconstruct the point cloud by using the recovered patches.

```
┌─────────────────────────────────────────┐
│ Demultiplexing a bit stream of a point   │
│ cloud into a patch image and indexes      ├── 801
│ corresponding to a plurality of patches   │
│ in the patch image                        │
└─────────────────────────────────────────┘
                    │
                    ▼
┌─────────────────────────────────────────┐
│ Looking up an index table to obtain an   │
│ orientation of each patch and            ├── 802
│ transforming the patch image according    │
│ to the orientation to recover the         │
│ plurality of patches of the point cloud   │
└─────────────────────────────────────────┘
                    │
                    ▼
┌─────────────────────────────────────────┐
│ Reconstructing the point cloud through   ├── 803
│ the recovered patches                     │
└─────────────────────────────────────────┘
```

FIG. 8

EP 3 591 975 A1

**Description**

**BACKGROUND**

Technical Field

The disclosure relates to a method and an apparatus for processing images, and more particularly, relates to a method and an apparatus for processing patches of a point cloud.

Description of Related Art

In the existing methods for representing visual elements in the real world, outputs from the camera are compressed by using a specific Motion Picture Experts Group (MPEG) video encoding standard for transmission and storage, and finally decoded by a player for display on a flat panel display. Currently, an increasing number of apparatuses are configured to capture and display three-dimensional (3D) images in the real world. A point cloud is a set of a plurality of points in the three-dimensional space. Each of the points has three-dimensional coordinates, and some points may include image attribute values, such as colors, materials, reflective surface intensity, or other attributes. The point cloud may be used for reconstructing objects or scenes into the composition of these points.

For instance, in the applications of virtual reality (VR) and augmented reality (AR) which receive wide popularity in the entertainment industry in recent years, data points of the point cloud may be used to present 3D objects of VR and AR. Nevertheless, the point cloud may include thousands to billions of points captured by a plurality of cameras and depth sensors according to different configurations, so as to faithfully present a scene to be reconstructed. Therefore, a compression technique is required to reduce the amount of data used for presenting the point cloud, so as to ensure high quality and high speed video transmission.

**SUMMARY**

Accordingly, the disclosure provides a method and an apparatus for processing patches of a point cloud capable of improving encoding efficiency of compression of the point cloud, so that high quality and high speed video transmission is ensured.

An embodiment of the disclosure provides an apparatus for processing patches of a point cloud including an input/output (I/O) device, a storage device, and a processor. The I/O device is configured to receive data of the point cloud. The storage device is configured to store an index table recording indexes corresponding to a plurality of orientations. The processor is coupled to the I/O device and the storage device and is configured to execute a program to generate a plurality of patches of the point cloud. The point cloud includes a plurality of points in a three-dimensional space, and each of the patches corresponds to a portion of the point cloud. An orientation in which each patch is adapted to generate a patch image is determined, and each patch is transformed to generate the patch image according to the determined orientation. The patch image is packed and the index corresponding to the orientation of each patch is recorded.

An embodiment of the disclosure provides an apparatus for processing patches of a point cloud including an input/output (I/O) device, a storage device, and a processor. The I/O device is configured to receive a bit stream of the point cloud. The storage device is configured to store an index table recording indexes corresponding to a plurality of orientations. The processor is coupled to the I/O device and the storage device and is configured to execute a program to demultiplex the bit stream into a patch image and indexes corresponding to a plurality of patches in the patch image. An index table is looked up to obtain an orientation of each patch and the patch image is transformed and projected according to the orientation to recover the plurality of patches of the point cloud. The point cloud is reconstructed by using the recovered patches.

An embodiment of the disclosure provides a method for processing patches of a point cloud suitable for a decoder having a processor. In the method, a bit stream of the point cloud is demultiplexed into a patch image and indexes corresponding to a plurality of patches in the patch image. An index table is looked up to obtain an orientation of each patch and the patch image is transformed according to the orientation to recover the plurality of patches of the point cloud. The point cloud is reconstructed by using the recovered patches.

To make the aforementioned more comprehensible, several embodiments accompanied with drawings are described in detail as follows.

**BRIEF DESCRIPTION OF THE DRAWINGS**

FIG. 1 is a block diagram of an apparatus for processing patches of a point cloud according to an exemplary embodiment of the disclosure.

FIG. 2 is a flow chart illustrating a method for processing patches of a point cloud according to an exemplary embodiment of the disclosure.

FIG. 3 is an example illustrating the method for processing patches of the point cloud according to an exemplary embodiment of the disclosure.

FIG. 4A and FIG. 4B are examples illustrating patch projection methods according to an exemplary embodiment of the disclosure.

FIG. 5 is an example illustrating patch image generation through rotating and shifting patches according to an exemplary embodiment of the disclosure.

FIG. 6 is a detailed flow chart of the method for processing patches of the point cloud according to an exemplary embodiment of the disclosure.

FIG. 7 is a block diagram of an apparatus for processing patches of a point cloud according to an exemplary embodiment of the disclosure.

FIG. 8 is a flow chart illustrating the method for processing patches of the point cloud according to an exemplary embodiment of the disclosure.

FIG. 9 is a detailed flow chart illustrating the method for processing patches of the point cloud according to an exemplary embodiment of the disclosure.

FIG. 10 is a flow chart illustrating the method for processing patches of the point cloud according to an exemplary embodiment of the disclosure.

FIG. 11 is a flow chart illustrating the method for processing patches of the point cloud according to an exemplary embodiment of the disclosure.

## DESCRIPTION OF THE EMBODIMENTS

In a method for processing patches of a point cloud provided by the disclosure, different projection methods are allowed to be used for each of the patches of the point cloud when encoding is performed. Further, the projection methods used for the patches may be instructed by additional information, so that a decoder may recover the patches and reconstruct the point cloud according to the projection methods instructed by such information. Accordingly, encoding efficiency of point cloud compression is improved, and high quality and high speed video transmission is ensured.

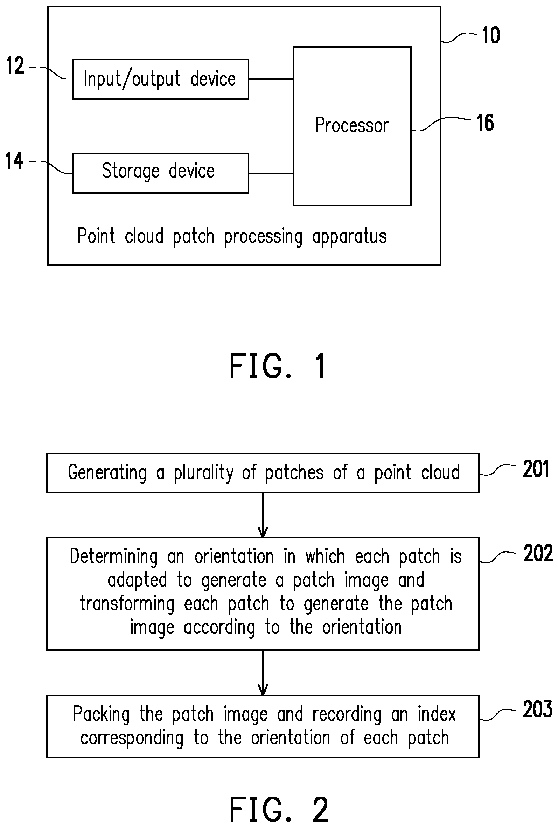

FIG. 1 is a block diagram of an apparatus for processing patches of a point cloud according to an exemplary embodiment of the disclosure. With reference to FIG. 1, a point cloud patch processing apparatus 10 is, for example, a camera, a video camera, a cell phone, a personal computer, a virtual reality apparatus, an augmented reality apparatus, a cloud server, or other apparatuses with a computing function and acts as an encoder, for example, to execute a method for processing patches of the point cloud provided by the embodiments of the disclosure. In the point cloud patch processing apparatus 10, at least an input/output (I/O) device 12, a storage device 14, and a processor 16 are included, and functions of the devices are provided as follows.

The I/O device 12 is, for example, a wired or wireless transmission interface supporting Universal Serial Bus (USB), RS232, Bluetooth (BT), wireless fidelity (Wi-Fi) and is configured to receive point cloud data provided by an image source apparatus such as a camera or a video camera and then outputs a processed video stream. In an embodiment, the I/O device 12 may also be a network card supporting Ethernet or supporting wireless network standards such as 802.11g, 802.11n, 802.11ac, etc., so that the point cloud patch processing apparatus 10 may be connected to the network and may input and output data through the network.

The storage device 14 is, for example, a fixed or movable random access memory (RAM), a read-only memory (ROM), a flash memory, a hard disk, or other similar devices of any form or a combination of the foregoing devices and is configured to store a program which may be executed by the processor 16. In an embodiment, the storage device 14, for example, stores an index table recording indexes corresponding to a plurality of orientations.

The processor 16 is coupled to the I/O device 12 and the storage device 14, and is, for example, a central processing unit (CPU) or a programmable microprocessor for general or special use, a digital signal processor (DSP), a programmable controller, an application specific integrated circuits (ASIC), a programmable logic controller (PLC), or other similar devices or a combination of these devices, and may load and execute the program stored in the storage device 14 to execute the method for processing patches of the point cloud provided by the embodiments of the disclosure.

FIG. 2 is a flow chart illustrating a method for processing patches of a point cloud according to an exemplary embodiment of the disclosure. With reference to FIG. 1 and FIG. 2 together, the method provided by this embodiment is adapted to the point cloud patch processing apparatus 10, and steps of the method for processing patches of the point cloud provided by this embodiment together with the devices of the point cloud patch processing apparatus 10 are described in detail as follows.

First, in step 201, the processor 16 generates a plurality of patches of the point cloud. Herein, the point cloud includes a plurality of points in a three-dimensional space, and each point may include geometry information that can be used to define a geometry position of the point and attribute information that can be used to define color, reflectance, transparency, and other attributes of the point. Each patch corresponds to a portion of the point cloud and the portion may be a set of several points having deviations in surface normal vectors less than a threshold, for example.

In step 202, the processor 16 determines an orientation in which each patch is adapted to generate a patch image and transform each patch to generate the patch image according to the orientation. In some embodiments, the processor 16 determines the orientation in which each patch is adapted to generate the patch image by adopting an algorithm such as compact packing, similarity comparison, intra prediction, or inter prediction.

Specifically, in an embodiment, the processor 16, for example, compares positions and sizes of a plurality of blocks in each patch to calculate the similarity of the blocks among the patches, so as to accordingly determine a position of each patch in the patch image. Herein, the processor 16, for example, projects the patches to different orientations and calculates similarity based on the patches projected to different orientations, so as to determine the orientation in which each patch is adapted to generate the patch image. In other embodiments, the processor 16 may use the patches being projected to different orientation to perform intra prediction or inter prediction, so as to find a combination which exhibits favorable encoding efficiency to determine the orientation in which each patch is adapted to generate the patch image. However, the method for determining the projection orientation is not limited by the embodiment.

In an embodiment, the processor 16 may determine the orientation in which each patch is adapted to generate the patch image according to a predetermined projection method or a projection method selected by a user. The projection method, for example, includes 2 orientations, 8 orientations, or any subset of n orientations (n is an integer greater than 2), which is not limited herein.

Taking 2 orientations for example, it includes, for example, the projection methods of rotating the patch by 0° (i.e., not rotated) and rotating the patch to a predetermined orientation (e.g., rotating a mirror image of the patch by 270°), for example. In an embodiment, the processor 16 may determine whether each patch is adapted to rotate to the predetermined orientation. If the patch is adapted to rotate, the processor 16 places the patch into the patch image after rotating the patch to the predetermined orientation, and if the patch is not adapted to rotate, the processor 16 directly places the patch into the patch image. In another embodiment, the processor 16 may determine whether a width is greater than a height of each patch. If the determination result is no, the processor 16 places the patch into the patch image after rotating the patch to the predetermined orientation, and if the determination result is yes, the processor 16 directly places the patch into the patch image.

Taking 8 orientations for example, it includes, for example, the projection methods of rotating the patch by 0° (i.e., not rotated), 90°, 180°, and 270°, and rotating a mirror image of the patch by 0°, 90°, 180°, and 270°, for example. The processor 16 may determine which orientation among the 8 predetermined orientations to which each patch is adapted to rotate, so as to place each patch into the patch image after rotating each patch according to the determined predetermined orientation.

Taking any subset of n orientations for example, 4 random orientations, for example, may be selected out of the 8 predetermined orientations (as described in the foregoing embodiment). That is, the processor 16 is predetermined to provide selection of 8 orientations but may enable 4 orientations only according to needs from the system or user at the moment and disable the rest of the 4 orientations. Accordingly, when determining the rotation orientation of each patch, the processor 16 determines the orientation in which each patch is adapted to rotate according to the 4 enabled orientations only and then places each patch into the patch image after rotating each patch according to the determined orientation.

Referring back to the flow of FIG. 2, in step 203, the processor 16 packs the patch image and records the index corresponding to the orientation of each patch. Specifically, the processor 16, for example, packs the patch image including patches which are appropriately transformed as a geometry image recording the geometry position of each patch, a texture image recording color composition of each patch, and an occupancy map recording which pixels in the geometry image and the texture image are valid data. After being processed through image padding, smoothing, and compression, the geometry image, texture image, and occupancy map are composed as a compressed bit stream through a multiplexer and outputted through the I/O device 12. In addition, the processor 16 may transform the previously-determined orientation of each patch into a corresponding index according to the pre-established index table, records the index to auxiliary patch information, and outputs the auxiliary patch information together with the packed patch image.

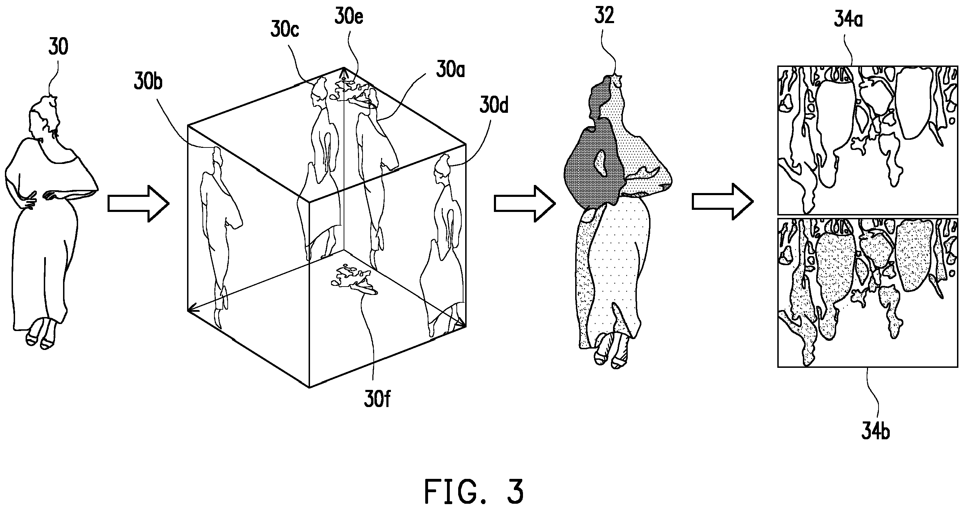

For instance, FIG. 3 is an example illustrating the method for processing patches of the point cloud according to an exemplary embodiment of the disclosure. With reference to FIG. 3, an object 30 in the point cloud is taken as an example in this embodiment to illustrate the process of patch image generation performed by the point cloud patch processing apparatus.

First, projections on six surfaces of front, rear, left, right, up, and down around the object 30 in the point cloud are calculated, so that six patches 30a to 30f are generated. Next, a color block distribution (different frames in a patch 32 represent different blocks) in each patch (e.g., the patch 32) is analyzed. A similarity comparison method is used to sequentially calculate similarity between the projection of the patches 30a to 30f in different orientations and the projection of other patches, so that the orientation and position of each of the patches 30a to 30f in the patch image is determined. Finally, each of the patches 30a to 30f is transformed according to the determined orientation, so that a patch image including content of all of the patches 30a to 30f is generated. The patch image is packed as a texture image 34a recording the color composition of each of the patches 30a to 30f and a geometry image 34b recording the geometry position of each of the patches 30a to 30f as shown in FIG. 3.

It is noted that when determining the orientation in which each patch is adapted to generate the patch image, the point cloud patch processing apparatus 10 determines such orientation according to the predetermined projection method or the projection method selected by the user, for example, and records the index corresponding to the orientation of each patch according to the index table corresponding to the selected projection method.

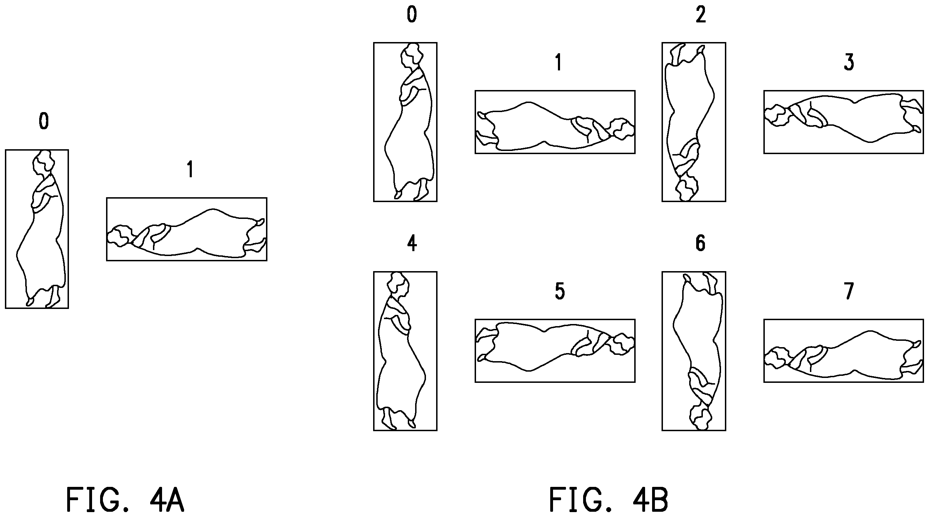

For instance, FIG. 4A and FIG. 4B are examples illustrating patch projection methods according to an exemplary embodiment of the disclosure. Taking the projection method of 2 orientations for example, as shown in FIG. 4A, it includes rotating a patch by 0° and rotating a mirror image of the patch by 270°, and the corresponding indexes are 0 and 1. Moreover, taking the projection method of 8 orientations as an example, as shown in FIG. 4B, it includes rotating the patch by 0°, 90°, 180°, and 270° and rotating a mirror image of the patch by 0°, 90°, 180°, and 270°, and the corresponding indexes are 0 to 7, respectively.

In an embodiment, in the process of determining the patch image adapted to be generated by each patch, in addition to determining the orientation of each patch, the point cloud patch processing apparatus 10 may further determine an offset of each patch to shift the patch. Through shifting the patches after being rotated, the patches in the patch image may be arranged more closely, so that efficiency of encoding is increased. The offset is, for example, an offset between a position of each patch after being shifted and an original point of the patch or an original point of the point cloud, which is not limited therein.

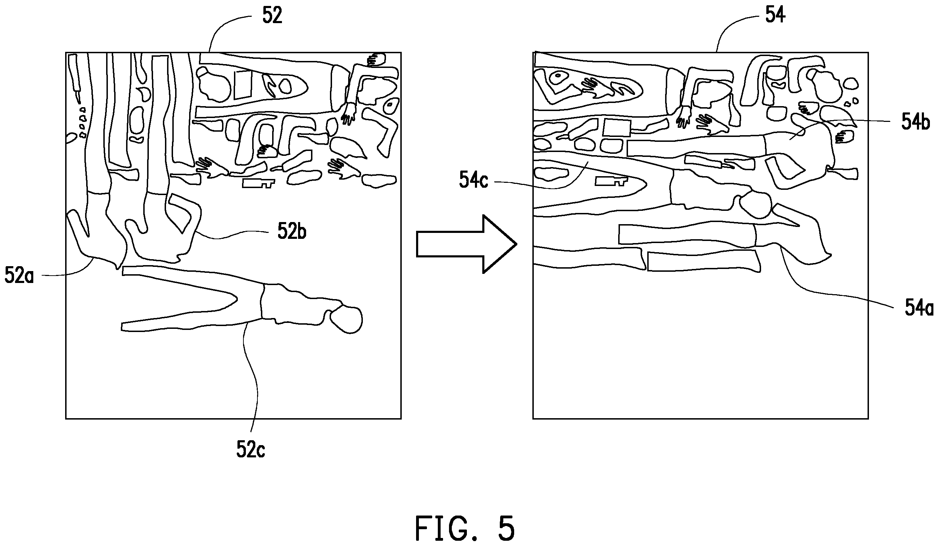

For instance, FIG. 5 is an example illustrating patch image generation through rotating and shifting patches according to an exemplary embodiment of the disclosure. With reference to FIG. 5, a patch image 52 is generated through a conventional method. Taking patches 52a, 52b, and 52c for example, in the conventional manner, without rotating or shifting the patches, unoccupied regions in the patch image 52 that may be used to accommodate existing patch are found row by row from top to bottom directly according to regions in patch image 52 that are occupied by other patches at the moment. The patches 52a, 52b, and 52c are then placed into the patch image 52 in sequence.

On the other hand, a patch image 54 is generated through the method for processing patches of the point cloud provided by the embodiments of the disclosure. Taking patches 54a, 54b, and 54c for example, after rotating the existing patches to different orientations, the point cloud patch processing apparatus further shifts the rotated patches in the patch image 54, so as to determine the orientations and offsets in which the existing patches are adapted to generate the patch image 54 according to similarity between the existing patches and other patches after the existing patches are rotated to different orientations and shifted. Finally, the patches are rotated according to the determined orientations and the rotated patches are shifted according to the determined offsets so as to generate the patch image 54. When the patch image 52 and the patch image 54 are compared, it can be seen that the patches in the patch image 54 are arranged more closely since the patches in the patch image 54 are appropriately rotated and shifted, so that efficiency of encoding is enhanced.

In an embodiment, the processor 16, for example, processes the geometry image, the texture image, and the occupancy map through image padding, smoothing, and compression, adds the indexes recording the orientation of each patch to the auxiliary patch information, and performs compression. Finally, the compressed data is composed as a compressed bit stream through the multiplexer and outputted through the I/O device 12.

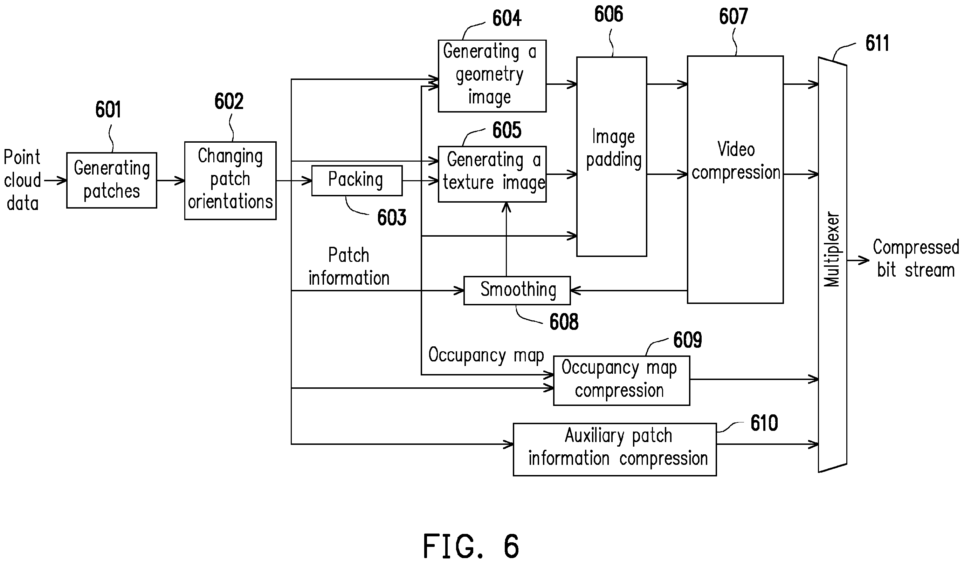

Specifically, FIG. 6 is a detailed flow chart of the method for processing patches of the point cloud according to an exemplary embodiment of the disclosure. With reference to FIG. 1 and FIG. 6 together, the method provided by this embodiment is adapted to the point cloud patch processing apparatus 10, and steps of the method for processing patches of the point cloud provided by this embodiment together with the devices of the point cloud patch processing apparatus 10 are described in detail as follows.

First, in step 601, the processor 16 generates a plurality of patches after receiving point cloud data through the I/O device 12 and in step S602, changes patch orientations through the method for processing patches of the point cloud to generate a patch image and patch information described above (e.g., the orientation of each patch in the patch image).

The processor 16 packs the patch image to generate an occupancy map in step 603, generates a geometry image in step 604, and generates a texture image in step 605. Image padding and video compression are performed on the generated geometry image and texture image respectively in step 606 and step 607 in sequence, so that a compressed geometry image and a compressed texture image are obtained. Herein, in step 608, the processor 16 performs smoothing on the geometry image reconstructed by using the compressed geometry image according to the previously-generated patch information and then feeds the processed geometry image back to step 605, so that the texture image may be accordingly generated.

From another aspect, in step 609, the processor 16 compresses the occupancy map generated in step 603 and in step 610, adds the patch information generated in step 602 to the auxiliary patch information and compresses the auxiliary patch information. Finally, in step 611, the processor 16 composes the compressed geometry image, the compressed texture image, the compressed occupancy map, and the compressed auxiliary patch information generated in the foregoing steps into a compressed bit stream through a multiplexer and outputs the compressed bit stream through the I/O device 12.

Through the foregoing method, in the point cloud patch processing apparatus 10 provided by the embodiments of the disclosure, the patch image is generated after the plurality of patches generated by the point cloud are appropriately transformed. Further, information such as the patch image and indexes recording patch orientations is compressed and then outputted, so that the decoder may recover the patches and reconstruct the point cloud according to the information. Several examples are provided below to illustrate a structure of a decoder and a method for processing patches of a point cloud (decoding method) corresponding to the decoder.

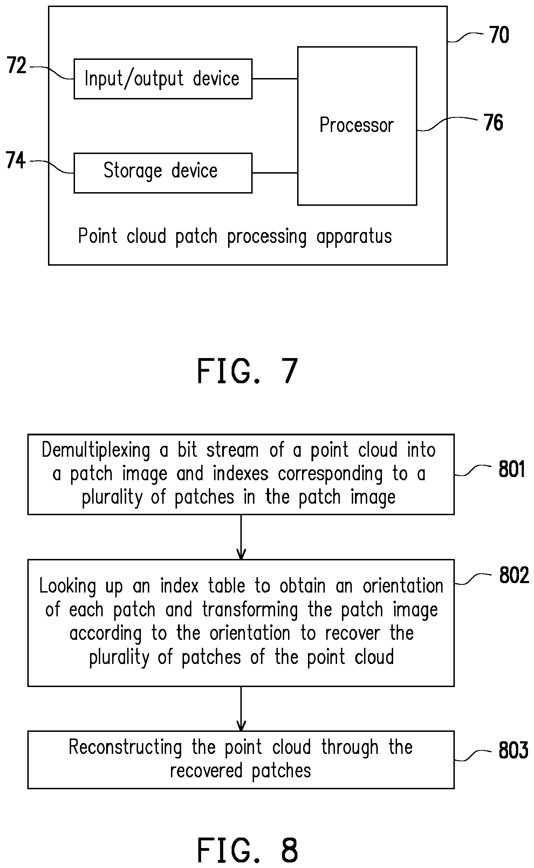

FIG. 7 is a block diagram of a point cloud patch processing apparatus according to an exemplary embodiment of the disclosure. With reference to FIG. 7, in this embodiment, a point cloud patch processing apparatus 70 is, for example, a camera, a video camera, a cell phone, a personal computer, a virtual reality apparatus, an augmented reality apparatus, a cloud server, or other apparatuses with a computing function and at least includes an I/O device 72, a storage device 74 and a processor 76. Constitutions of the I/O device 72, the storage device 74, and the processor 76 are identical or similar to the constitutions of the I/O device 12, the storage device 14, and the processor 16 provided in the foregoing embodiments, repeated description is thus not provided herein. The difference between this embodiment and the foregoing embodiments is that the point cloud patch processing apparatus 70 of this embodiment is used as a decoder to execute the method for processing patches of the point cloud provided by the embodiments of the disclosure.

Specifically, FIG. 8 is a flow chart illustrating the method for processing patches of the point cloud according to an exemplary embodiment of the disclosure. With reference to FIG. 7 and FIG. 8 together, the method provided by this embodiment is adapted to the point cloud patch processing apparatus 70, and steps of the method for processing patches of the point cloud provided by this embodiment together with the devices of the point cloud patch processing apparatus 70 are described in detail as follows.

First, in step 801, the processor 76 receives a bit stream from the point cloud through the I/O device 72, so as to demultiplex the bit stream of the point cloud into a patch image and indexes corresponding to a plurality of patches in the patch image.

Next, in step 802, the processor 76 looks up an index table pre-stored in the storage device 74 to obtain an orientation of each patch and transforms the patch image according to the orientations being looked up to recover the plurality of patches of the point cloud.

In an embodiment, the processor 76 may select the index table to look up the orientations of the patches according to a predetermined projection method, and such projection method includes n orientations (n is an integer greater than 2), for example.

Taking 2 orientations for example, it includes the projection method of rotating a patch by 0° (i.e., not rotated) and rotating the patch to a predetermined orientation (e.g., rotating a mirror image of the patch by 90°), for example. The processor 76 may look up the index table by using the indexes to determine whether each patch in the patch image has been rotated. Herein, if rotated, the processor 76 inverts the patches according to the predetermined orientation to recover the patches, and if not rotated, the processor 76 does not transform the patches.

It is noted that in an embodiment, the processor 76 further looks up an offset of each patch in the patch image by using the indexes, so as to reversely shift each patch according to the offset being looked up. Herein, the offset is, for example, an offset between a position of each patch after being shifted and an original point of the patch or an original point of the point cloud, which is not limited therein.

For instance, the following Table 1 is a lookup table of adaptive patch rotation functions. Herein, a value of an identifier corresponds to, for example, an index *Idx*. That is, when the index *Idx* is 0, the identifier is set as FPO_NULL, and when the index *Idx* is 1, the identifier is set as FPO_SWAP.

| *Idx* | Identifier | *Rotation(Idx)* | *Offset(Idx)* |
|---|---|---|---|
| 0 | FPO_NULL | $\begin{bmatrix} 1 & 0 \\ 0 & 1 \end{bmatrix}$ | $\begin{bmatrix} 0 \\ 0 \end{bmatrix}$ |
| 1 | FPO_SWAP | $\begin{bmatrix} 0 & 1 \\ 1 & 0 \end{bmatrix}$ | $\begin{bmatrix} 0 \\ 0 \end{bmatrix}$ |

Based on the set identifier, after the patches are recovered, the frame coordinates (x, y) may be calculated as follows through the lookup table:

$$\begin{bmatrix} x \\ y \end{bmatrix} = Rotation(Idx) * \begin{bmatrix} u \\ v \end{bmatrix} + Offset(Idx) + \begin{bmatrix} Patch2dShiftU(fIdx) \\ Patch2dShiftV(fIdx) \end{bmatrix} \quad (1)$$

Herein, the coordinates ($u$, $v$) are the original coordinates of each patch in the patch image. Outputs of a rotation function *Rotation*($x$) and an offset function *Offset*($x$) are the matrixes defined in Table 1. An index $fIdx$ is an index value of a number of a frame marked in the image, and patch shift functions *Patch2dShiftU* and *Patch2dShiftV* respectively are the X position and Y position of the top left corner of the patch in the patch image.

From another aspect, taking 8 orientations for example, it includes the projection method of rotating the patch by 0° (i.e., not rotated), 90°, 180°, and 270°, and rotating a mirror image of the patch by 0°, 90°, 180°, and 270°, for example. The processor 16 may determine which orientation among the 8 predetermined orientations each patch in the patch image is rotated through looking up the index table, so as to invert each patch according to the predetermined orientation being looked up.

For instance, the following Table 2 is a lookup table of adaptive patch rotation functions. Herein, values of the rotation function *Rotation*($x$) and the offset function *Offset*($x$) correspond to, for example, the index *Idx.*

Table 2

| Idx | Rotation(Idx) | Offset(Idx) |
|---|---|---|
| 0 | $\begin{bmatrix} 1 & 0 \\ 0 & 1 \end{bmatrix}$ | $\begin{bmatrix} 0 \\ 0 \end{bmatrix}$ |
| 1 | $\begin{bmatrix} 0 & -1 \\ 1 & 0 \end{bmatrix}$ | $\begin{bmatrix} \text{Patch2dSizeV} * \text{BlockSize} - 1 \\ 0 \end{bmatrix}$ |
| 2 | $\begin{bmatrix} -1 & 0 \\ 0 & -1 \end{bmatrix}$ | $\begin{bmatrix} \text{Patch2dSizeU} * \text{BlockSize} - 1 \\ \text{Patch2dSizeV} * \text{BlockSize} - 1 \end{bmatrix}$ |
| 3 | $\begin{bmatrix} 0 & 1 \\ -1 & 0 \end{bmatrix}$ | $\begin{bmatrix} 0 \\ \text{Patch2dSizeU} * \text{BlockSize} - 1 \end{bmatrix}$ |
| 4 | $\begin{bmatrix} -1 & 0 \\ 0 & 1 \end{bmatrix}$ | $\begin{bmatrix} \text{Patch2dSizeU} * \text{BlockSize} - 1 \\ 0 \end{bmatrix}$ |
| 5 | $\begin{bmatrix} 0 & -1 \\ -1 & 0 \end{bmatrix}$ | $\begin{bmatrix} \text{Patch2dSizeV} * \text{BlockSize} - 1 \\ \text{Patch2dSizeU} * \text{BlockSize} - 1 \end{bmatrix}$ |
| 6 | $\begin{bmatrix} 1 & 0 \\ 0 & -1 \end{bmatrix}$ | $\begin{bmatrix} 0 \\ \text{Patch2dSizeV} * \text{BlockSize} - 1 \end{bmatrix}$ |
| 7 | $\begin{bmatrix} 0 & 1 \\ 1 & 0 \end{bmatrix}$ | $\begin{bmatrix} 0 \\ 0 \end{bmatrix}$ |

Herein, the BlockSize is a size of a coding block of the occupancy map, and Patch2dSizeU and Patch2dSizeV respectively are values obtained by dividing the width and height of the patch by the BlockSize. Outputs of the rotation function *Rotation*($x$) and the offset function *Offset*($x$) may be looked up through Table 2 and introduced to formula (1), so as to calculate the frame coordinates ($x$, $y$) of the patch.

Referring back to the flow of FIG. 8, in step 803, the processor 76 reconstructs the point cloud through the recovered patches. Herein, the processor 76, for example, projects each two-dimensional patch to a three-dimensional space through the predetermined projection method so as to reconstruct the point cloud. Specifically, the processor 76 may demultiplex the bit stream of the point cloud into the geometry image, the texture image, the occupancy map, and the auxiliary patch information corresponding to each frame. The processor 76 may learn which pixels in the geometry image and the texture image are valid data through the occupancy map and may learn the patch information such as belonging to which patch through the auxiliary patch information. The processor 76 may then project the two-dimensional patch to the three-dimensional space through the valid data and the patch information, so as to reconstruct the point cloud.

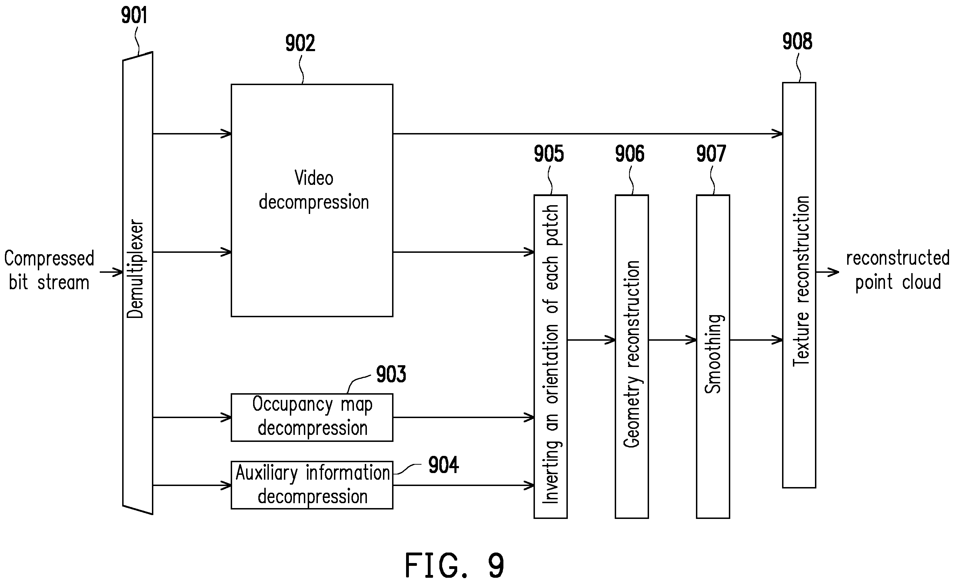

Specifically, FIG. 9 is a detailed flow chart illustrating the method for processing patches of the point cloud according to an exemplary embodiment of the disclosure. With reference to FIG. 7 and FIG. 9 together, the method provided by this embodiment is adapted to the point cloud patch processing apparatus 70, and steps of the method for processing patches of the point cloud provided by this embodiment together with the devices of the point cloud patch processing apparatus 70 are described in detail as follows.

First, in step 901, after receiving the compressed bit stream of the point cloud from the I/O device 72, the processor 76 demultiplexes the compressed bit stream into the compressed texture image, the compressed geometry image, the compressed occupancy map, and the compressed auxiliary patch information. Herein, in step 902, the processor 76 performs video decompression on the compressed texture image and the compressed geometry image to generate a decompressed texture image and a decompressed geometry image. In step 903, the processor 76 decompresses the compressed occupancy map to generate a decompressed occupancy map. In step 904, the processor 76 decompresses the compressed auxiliary patch information to generate decompressed auxiliary patch information.

In step 905, the processor 76 learns which pixels in the decompressed geometry image are valid data according to the decompressed occupancy map and then inverts the orientation of each patch in the decompressed geometry image according to the patch information such as the orientation and offset of each patch recorded in the decompressed auxiliary patch information. Such inversion may include orientation inversion and/or shift inversion, which is not limited herein.

In step 906, the processor 76 projects the inverted patches to the three-dimensional space to reconstruct geometry portions (e.g., including positions and shapes) and in step 907, performs smoothing on the reconstructed geometry portions. Finally, in step 908, the processor 76 decompresses the texture image and performs texture reconstruction on the reconstructed geometry portions, so as to obtain the reconstructed point cloud.

Through the foregoing method, the point cloud patch processing apparatus 70 provided by the embodiments of the disclosure may decompose the compressed bit stream into the patch image and the patch information required for reconstructing the point cloud, and reconstruct the point cloud by inverting the patches and projecting the inverted patches to the three-dimensional space.

In an embodiment, in the method for processing patches of the point cloud provided by the disclosure, encoding is performed with reference to parameters such as computing resources and network resources of the existing device, and the appropriate projection method is then selected to process the patches, so that high quality and high speed video transmission is ensured.

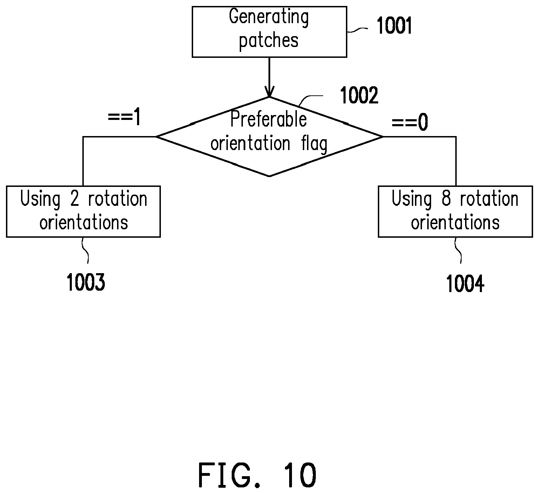

Specifically, FIG. 10 is a flow chart illustrating the method for processing patches of the point cloud according to an exemplary embodiment of the disclosure. With reference to FIG. 1 and FIG. 10 together, the method of this embodiment is adapted to the point cloud patch processing apparatus 10, and steps of the method for processing patches of the point cloud provided by this embodiment together with the devices of the point cloud patch processing apparatus 10 are described in detail as follows.

First, in step 1001, the processor 16 generates a plurality of patches of the point cloud. In step 1002, the processor 16 determines to use 2 rotation orientations or 8 rotation orientations to rotate the patches according to parameters at the moment, such as available computing resources, network bandwidth, encoding capabilities of the encoder, and decoding capabilities of the decoder, and sets a preferable orientation flag according to the determination result, so that the decoder may perform decoding with reference to the preferable orientation flag. Herein, if the value of the preferable orientation flag is set to be 1, then 2 rotation orientations are used in step 1003, and if the value of the preferable orientation flag is set to be 0, then 8 rotation orientations are used in in step 1004.

In addition, the processor 16 may also use more flags to mark the processing method of each patch according to needs of the system or user, so that the decoder may accordingly recover the patches and reconstruct the point cloud.

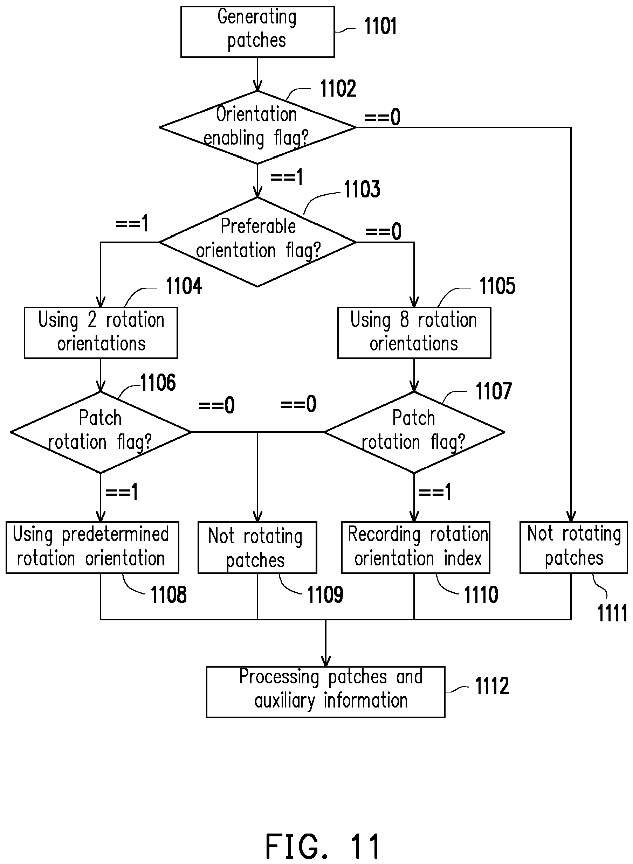

Specifically, FIG. 11 is a flow chart illustrating the method for processing patches of the point cloud according to an exemplary embodiment of the disclosure. With reference to FIG. 1 and FIG. 11 together, the method provided by this embodiment is suitable for the point cloud patch processing apparatus 10, and steps of the method for processing patches of the point cloud provided by this embodiment together with the devices of the point cloud patch processing apparatus 10 are described in detail as follows.

First, in step 1101, the processor 16 generates a plurality of patches of the point cloud. In step 1102, the processor 16 determines whether to enable an orientation rotation function according to system configuration or user operation. Herein, if it is determined that the orientation rotation function is required to be enabled, the processor 16 sets the value of an orientation enabling flag to be 1, and performs step 1103. Conversely, the processor 16 sets the value of the orientation enabling flag to be 0, and performs step 1111 in which no patch is rotated.

If it is determined that the orientation rotation function is required to be enabled, in step 1103, the processor 16 determines to use 2 rotation orientations or 8 rotation orientations to rotate the patches according to available resource parameters at the moment and sets the preferable orientation flag according to the determination result. Herein, if the value of the preferable orientation flag is set to be 1, then 2 rotation orientations are used in step 1004, and if the value of the preferable orientation flag is set to be 0, then 8 rotation orientations are used in in step 1005.

If the 2 rotation orientations are used, in step 1106, the processor 16 may determine whether each patch is adapted to rotate to the predetermined orientation and set a patch rotation flag according to the determination result. Herein, if the value of the patch rotation flag is set to be 1, the patches are rotated to a predetermined rotation orientation in step 1108, and if the value of the patch rotation flag is set to be 0, no patch is rotated in step 1109.

If the 8 rotation orientations are used, in step 1107, the processor 16 may determine whether each patch is adapted to rotate to the predetermined orientation (i.e., the 7 orientations other than rotation by 0°) and set the patch rotation flag according to the determination result. Herein, if the value of the patch rotation flag is set to be 1, the patches are rotated to one of the predetermined 7 rotation orientations and the index of such rotation orientation is recorded (e.g., using 3 bits to record 7 types of states) in step 1110, and if the value of the patch rotation flag is set to be 0, no patch is rotated (i.e. rotation by 0°) in step 1109.

Finally, in step 1112, the processor 16 performs processing such as image padding, smoothing, compression on the patches processed and the auxiliary information generated through the foregoing steps, and detailed content thereof is described in the foregoing embodiments and thus is not repeated herein.

In view of the foregoing, in the method and apparatus for processing patches of the point cloud provided by the disclosure, the patches of the point cloud are rotated and/or shifted during encoding, such that in the generated patch image, the patches are arranged more closely, and encoding efficiency of point cloud compression is therefore improved. In addition, in the method provided by the disclosure, patch information such as the rotation orientation and offset of each patch is further added to the auxiliary information and provided to the decoder together, so that the decoder may recover the patches and reconstruct the point cloud. Accordingly, encoding efficiency of point cloud compression is improved, and high quality and high speed video transmission is ensured.

[Reference Sign List]

10, 70 Point cloud patch processing apparatus
12, 72 I/O device
14, 74 Storage device
16, 76 Processor
30 Object
30a~30f, 32, 52a, 52b, 52c, 54a, 54b, 54c Patch
34a Texture image
34b Geometry image
52, 54 Patch image
201~203, 601~611, 801~803, 901~908, 1001~1004, 1101~1112 Steps

**Claims**

1.  An apparatus (10) for processing patches of a point cloud, **characterized in that**, the apparatus (10) for processing patches of a point cloud comprises:

    an input/output (I/O) device (12), receiving point cloud data;
    a storage device (14), storing an index table recording indexes corresponding to a plurality of orientations;
    a processor (16), coupled to the input/output device (12) and the storage device (14), and configured to execute a program to:

    generate a plurality of patches of the point cloud, wherein the point cloud comprises a plurality of points in a three-dimensional space, and each of the patches corresponds to a portion of the point cloud;
    determine an orientation in which each patch is adapted to generate a patch image and transform each patch to generate the patch image according to the orientation; and
    pack the patch image and look up the index table to obtain the index corresponding to the orientation of each patch.

2.  The apparatus (10) for processing patches of the point cloud as claimed in claim 1, wherein the processor (16) further determines that whether a width is greater than a height of each patch, places the patch into the patch image after rotating the patch to a predetermined orientation if a determination result is no, and directly places the patch into the patch image without rotating if the determination result is yes.

3. The apparatus (10) for processing patches of the point cloud as claimed in claim 1, wherein the processor (16) further determines that each patch is adapted to rotate by 0° or adapted to rotate a mirror image of the patch by 270° and places each patch into the patch image after rotating the patch according to the determined orientation.

4. The apparatus (10) for processing patches of the point cloud as claimed in claim 1, wherein the processor (16) further determines one of n predetermined orientations that each patch is adapted to rotate to, wherein n is an integer greater than 2, and places each patch into the patch image after rotating the patch according to the determined predetermined orientation, and wherein the n orientations comprise any combination of rotation by 0°, 90°, 180°, and 270° and rotation of a mirror image by 0°, 90°, 180°, and 270°.

5. The apparatus (10) for processing patches of the point cloud as claimed in claim 1, wherein the processor (16) selects m predetermined orientations from n predetermined orientations, wherein n is an integer greater than 2 and m is an integer less than n, determines one of the m predetermined orientations that each patch is adapted to rotate to, and places each patch into the patch image after rotating the patch according to the determined predetermined orientation.

6. The apparatus (10) for processing patches of the point cloud as claimed in claim 1, wherein the processor (16) further rotates each patch according to the orientation, determines an offset of each patch adapted to generate the patch image after rotating each patch, and shifts each rotated patch according to the offset to generate the patch image, wherein the offset comprises an offset between a position of each patch after being shifted and an original point of the patch or an original point of the point cloud.

7. An apparatus (70) for processing patches of a point cloud, **characterized in that**, the apparatus (70) for processing patches of a point cloud comprises:

   an input/output (I/O) device (72), receiving a bit stream of the point cloud;
   a storage device (74), storing an index table recording indexes corresponding to a plurality of orientations;
   a processor (76), coupled to the input/output device (72) and the storage device (74), and configured to execute a program to:

      demultiplex the bit stream into a patch image and indexes corresponding to a plurality of patches in the patch image;
      look up the index table to obtain an orientation of each patch and transform the patch image according to the orientation to recover the plurality of patches of the point cloud; and
      reconstruct the point cloud by using the recovered patches.

8. The apparatus (70) for processing patches of the point cloud as claimed in claim 7, wherein the processor (76) further looks up the index table by using the indexes to determine whether the patch has been rotated by 0° or have been rotated by rotating a mirror image of the patch by 270° and inverts each patch according to the determined orientation.

9. The apparatus (70) for processing patches of the point cloud as claimed in claim 7, wherein the processor (76) further looks up the index table to determine whether the patch has been rotated to one of n predetermined orientations, wherein n is an integer greater than 2, and inverts each patch according to the determined predetermined orientation, and wherein the n orientations comprise any combination of rotation by 0°, 90°, 180°, and 270° and rotation of a mirror image by 0°, 90°, 180°, and 270°.

10. The apparatus (70) for processing patches of the point cloud as claimed in claim 7, wherein each index further comprises an offset of each patch, and the processor (76) further reversely shifts each patch according to the offset, wherein the offset comprises an offset between a position of each patch after being shifted and an original point of the patch or an original point of the point cloud.

11. A method for processing patches of a point cloud, adapted to a decoder having a processor (76), the method comprising:

   demultiplexing a bit stream of the point cloud into a patch image and indexes corresponding to a plurality of patches in the patch image (801);
looking up an index table by using the indexes to obtain an orientation of each patch and transforming the patch image according to the orientation to recover the plurality of patches of the point cloud (802); and
reconstructing the point cloud by using the recovered patches (803).

12. The method as claimed in claim 11, wherein the step of looking up the index table by using the indexes to obtain the orientation of each patch and transforming the patch image according to the orientation comprises:

looking up the index table to determine whether each patch has been rotated;
inverting the patch to recover the patch if the patch has been rotated; and
not transforming the patch if the patch has not been rotated.

13. The method as claimed in claim 11, wherein the step of looking up the index table to obtain the orientation of each patch and transforming the patch image according to the orientation comprises:

looking up the index table to determine whether the patch has been rotated by 0° or has been rotated by rotating a mirror image of the patch by 270°; and
inverting each patch according to the determined orientation.

14. The method as claimed in claim 11, wherein the step of looking up the index table to obtain the orientation of each patch and transforming the patch image according to the orientation comprises:

looking up the index table to determine whether the patch is rotated to one of n predetermined orientations, wherein n is an integer greater than 2; and
inverting each patch according to the determined predetermined orientation,
wherein the n orientations comprise any combination of rotation by 0°, 90°, 180°, and 270° and rotation of a mirror image by 0°, 90°, 180°, and 270°.

15. The method as claimed in claim 11, wherein each index further comprises an offset of each patch, and the step of transforming the patch image according to the orientation further comprises:
reversely shifting each patch according to the offset, wherein the offset comprises an offset between a position of each patch after being shifted and an original point of the patch or an original point of the point cloud.

Input/output device

Storage device

Processor

Point cloud patch processing apparatus

10

12

14

16

FIG. 1

Generating a plurality of patches of a point cloud

201

Determining an orientation in which each patch is adapted to generate a patch image and transforming each patch to generate the patch image according to the orientation

202

Packing the patch image and recording an index corresponding to the orientation of each patch

203

FIG. 2

FIG. 3

FIG. 4A

FIG. 4B

EP 3 591 975 A1

FIG. 5

EP 3 591 975 A1

FIG. 6

EP 3 591 975 A1

Input/output device — 72

Storage device — 74

Processor — 76

— 70

Point cloud patch processing apparatus

# FIG. 7

| Demultiplexing a bit stream of a point cloud into a patch image and indexes corresponding to a plurality of patches in the patch image — 801 |

| Looking up an index table to obtain an orientation of each patch and transforming the patch image according to the orientation to recover the plurality of patches of the point cloud — 802 |

| Reconstructing the point cloud through the recovered patches — 803 |

# FIG. 8

EP 3 591 975 A1

FIG. 9

```
                                                                    Compressed
                                                                    bit stream
                                                                         ↓
                                                                   ┌──────────┐
                                                                   │          │  901
                                                                   │ Demulti- │←╲
                                                                   │  plexer  │
                                                                   │          │
  ┌─────────────────────────────┐                                 │          │
  │        Auxiliary information │  904                            │          │
  │        decompression         │←─────────────────────────────── │          │
  └─────────────────────────────┘                                 │          │
              ↓                                                    │          │
  ┌─────────────────────────────┐                                 │          │
  │        Occupancy map         │  903                            │          │
  │        decompression         │←─────────────────────────────── │          │
  └─────────────────────────────┘                                 │          │
              ↓                                                    │          │
  ┌──────────────┐         ┌────────────────────┐                 │          │
  │ Inverting an │         │                     │  902           │          │
  │ orientation  │←─────────│ Video               │←─────────────── │          │
  │ of each patch│  905     │ decompression       │                │          │
  └──────────────┘         │                     │                └──────────┘
              ↓             └────────────────────┘                     901
  ┌──────────────┐                    │
  │ Geometry     │  906               │
  │ reconstruction│                   │
  └──────────────┘                    │
              ↓                        │
  ┌──────────────┐  907               │
  │ Smoothing    │                    │
  └──────────────┘                    │
              ↓                        │
  ┌──────────────┐                    │
  │ Texture      │←───────────────────┘
  │ reconstruction│  908
  └──────────────┘
              ↓
     reconstructed
      point cloud
```

18

Generating
patches ⌐ 1001

⌐ 1002

==1    Preferable
orientation flag    ==0

Using 2 rotation
orientations

Using 8 rotation
orientations

1003    1004

FIG. 10

Generating patches — 1101

Orientation enabling flag? — 1102

==0

==1

Preferable orientation flag? — 1103

==1 ==0

Using 2 rotation orientations — 1104

Using 8 rotation orientations — 1105

Patch rotation flag? — 1106

==0 ==0

Patch rotation flag? — 1107

==1

Using predetermined rotation orientation — 1108

Not rotating patches — 1109

==1

Recording rotation orientation index — 1110

Not rotating patches — 1111

Processing patches and auxiliary information — 1112

FIG. 11

Europäisches
Patentamt

European
Patent Office

Office européen
des brevets

# EUROPEAN SEARCH REPORT

Application Number

EP 19 18 4143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KHALED MAMMOU ET AL: "Point Cloud Compression: Test Model Category 2 version 0.0", 120. MPEG MEETING; 23-10-2017 - 27-10-2017; MACAU; (MOTION PICTURE EXPERT GROUP OR ISO/IEC JTC1/SC29/WG11),, no. m41920, 27 October 2017 (2017-10-27), XP030070262, * paragraph [02.2]; figure 3 * | 1-15 | INV. H04N19/597 H04N19/88 H04N19/70 |
| Y | P V SANDER ET AL: "Multi-Chart Geometry Images", EUROGRAPHICS SYMPOSIUM ON GEOMETRY PROCESSING, 23 June 2003 (2003-06-23), pages 157-166, XP055634595, * paragraph [04.3]; figure 3 * | 1-15 | |
| X,P | DANILLO GRAZIOSI (SONY): "[PCC] TMC2 Patch Flexible Orientation", 123. MPEG MEETING; 20180716 - 20180720; LJUBLJANA; (MOTION PICTURE EXPERT GROUP OR ISO/IEC JTC1/SC29/WG11), , no. m43680 12 July 2018 (2018-07-12), XP030197024, Retrieved from the Internet: URL:http://phenix.int-evry.fr/mpeg/doc_end _user/documents/123_Ljubljana/wg11/m43680- v2-m43680.zip m43680-v2.docx [retrieved on 2018-07-12] * the whole document * | 1-15 | |

TECHNICAL FIELDS
SEARCHED (IPC)

H04N

The present search report has been drawn up for all claims

| Place of search | Date of completion of the search | Examiner |
|---|---|---|
| Munich | 23 October 2019 | Oelbaum, Tobias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)